# EUROPEAN PATENT SPECIFICATION

(11) **EP 4 432 617 B1**
(45) Date of publication and mention of the grant of the patent: **14.10.2026**
(21) Application number: 22889476.2
(22) Date of filing: 08.11.2022
(51) Int. Cl.: H04L 41/0803, H04L 67/51, H04W 8/18

(54) **INFORMATION TRANSMISSION METHOD AND APPARATUS**
INFORMATIONSÜBERTRAGUNGSVERFAHREN UND -VORRICHTUNG
PROCÉDÉ ET APPAREIL DE TRANSMISSION D'INFORMATIONS

(30) Priority: 08.11.2021 CN 202111316207
(43) Date of publication of application: 18.09.2024
(73) Proprietor: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: WANG, Dan, Beijing 100032 (CN); LIU, Tangqing, Beijing 100032 (CN); SUN, Tao, Beijing 100032 (CN); LU, Lu, Beijing 100032 (CN)
(74) Representative: GPI Brevets
(86) International application number: PCT/CN2022/130552
(87) International publication number: WO 2023/078455

(56) References cited:
- WO-A1-2021/134446
- CN-A- 109 951 824
- CN-A- 112 020 104
- US-A1- 2021 076 192
- HUAWEI ET AL: "URSP info provision for xBDT", vol. SA WG2, no. e-meeting; 20200420 - 20200423, 10 April 2020 (2020-04-10), XP052458994, Retrieved from the Internet <URL:https://ftp.3gpp.org/tsg_sa/WG2_Arch/TSGS2_138e_Electronic/Docs/S2-2002948.zip> [retrieved on 20200410]
- HUAWEI ET AL: "Correction to Providing AF request to multiple PCFs", vol. SA WG2, no. Montreal, Canada; 20180226 - 20180302, 19 March 2018 (2018-03-19), XP051412027, Retrieved from the Internet <URL:http://www.3gpp.org/ftp/Meetings%5F3GPP%5FSYNC/SA/Docs/> [retrieved on 20180319]
- HUAWEI, HISILICON: "Correction to Providing AF request to multiple PCFs", 3GPP TSG-SA2 MEETING #126 S2-182939, 8 March 2018 (2018-03-08), XP051411850
- NOKIA, NOKIA SHANGHAI BELL: "Usage of Ethernet PDU Session Information to support 5G VN Group point to point Ethernet traffic", SA WG2 MEETING #136AH S2-2001673, 17 January 2020 (2020-01-17), XP051844369
- HUAWEI, HISILICON: "URSP info provision for xBDT", 3GPP TSG-WG SA2 MEETING #138E E-MEETING S2-2002948, 10 April 2020 (2020-04-10), XP051874460

## Description

### TECHNICAL FIELD

The present disclosure relates to the field of communication technology, and in particular, to an information transmission method, an apparatus and a communication device.

### BACKGROUND

In current technology, the Edge Application Server Deployment Information (EDI) information is configured in a node granular manner. The EDI information refers to the domain name system (DNS) address information of the edge data network (DN), application fully qualified domain name (FQDN) information to which an address resolution can be performed, etc. This node level EDI can be configured based on the granularity of slices and data network name (DNN).

However, configuration based on slicing and DNN granularity is not conducive to flexible application server selection for large network users. In many scenarios, such as cloud gaming services, there will be Very Important Person (VIP) customers. VIP may need to use a server with upgraded Graphics Processing Unit (GPU), Central Processing Unit (CPU) to serve its service, so the application servers found by the same FQDN may be different. Therefore, the granularity of node-level EDI does not meet the above service requirements.

US2021076192A1 discussed a communications method and apparatus to subscribe a terminal event in a 5G architecture. 3GPP DRAFT S2-2002948 discussed the negotiation for future background data transfer between the AF and the PCF. 3GPP DRAFT S2-182939 discussed application function influence on traffic routing.

### SUMMARY

The invention is set out in the appended set of claims. The purpose of the embodiments of the present disclosure is to provide an information transmission method, an apparatus and a communication device, to solve the problem in related art that the granularity of node-level EDI cannot meet specific service requirements.

The present disclosure has at least the following beneficial effects:

According to the information transmission method in the present disclosure, the first device sends edge application server deployment information including an external group identifier to the second device, or the first device sends edge application server deployment information and external group identifier, so as to configure edge application server deployment information in a group granular manner, thereby better satisfying a flexible application server selection of specific user.

### BRIEF DESCRIPTION OF THE DRAWINGS

Fig. 1 is a first step flow chart of the information transmission method in the embodiment of the present disclosure;
Fig. 2 is a second step flow chart of the information transmission method in the embodiment of the present disclosure;
Fig. 3 is an interactive schematic view of Example 1 in the embodiment of the present disclosure;
Fig. 4 is a third step flow chart of the information transmission method in the embodiment of the present disclosure;
Fig. 5 is an interactive schematic view of Example 2 in the embodiment of the present disclosure;
Fig. 6 is a first schematic view of the information transmission apparatus in the embodiment of the present disclosure;
Fig. 7 is a first schematic view of the communication device in the embodiment of the present disclosure;
Fig. 8 is a second schematic view of the information transmission apparatus in the embodiment of the present disclosure;
Fig. 9 is a second schematic view of the communication device in the embodiment of the present disclosure;
Fig. 10 is a third schematic view of the information transmission apparatus in the embodiment of the present disclosure; and
Fig. 11 is a third schematic view of the communication device in the embodiment of the present disclosure.

### DETAILED DESCRIPTION

In order to make the technical problems, technical solutions and advantages to be solved by the present disclosure clearer, a detailed description will be given below with reference to the accompanying drawings and specific embodiments.

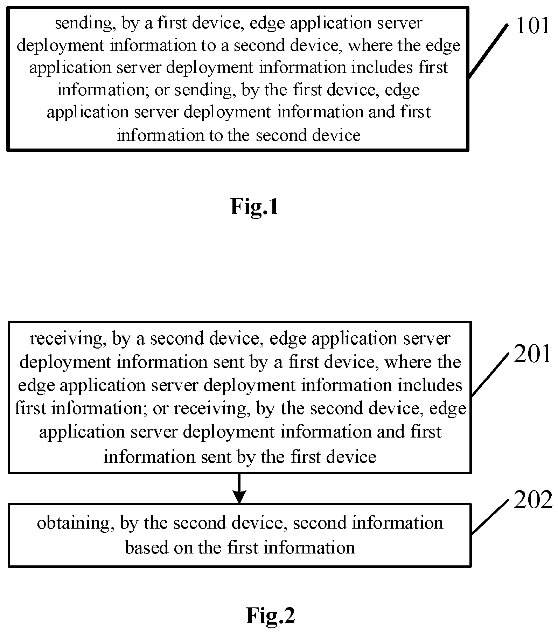

The following embodiment is not according to the invention and is present for illustration purposes only. As shown in Fig. 1, an embodiment of the present disclosure provides an information transmission method, which includes:
Step 101: sending, by a first device, edge application server deployment information to a second device, where the edge application server deployment information includes first information; or sending, by the first device, edge application server deployment information and first information to the second device;
where the first information is an external group identifier.

It should be noted that in the embodiment of the present disclosure, the external group identifier and the internal group identifier are both identifiers used to identify a group of user equipments (UE). The application function (AF) (i.e., the first device) is a function external to the fifth-generation mobile communication (5G) system, so the external group identifier is used. The 5G system inside uses an internal group identifier to identify a group of UEs.

Optionally, a group or multiple UEs with the same needs and the same processing requirements can be formed into a group.

Optionally, the first device is a network element or device corresponding to the application function (AF); and the second device is a network element or device corresponding to the network exposure function (NEF), which is not limited herein.

Optionally, the first information may be: a group identifier (group identifier, group ID), or a group of UE identifiers, or a UE group identifier, or a group identifier.

The embodiments of the present disclosure can configure edge application server deployment information in a group granular manner, thereby better satisfying the flexible application server selection of specific users and further improving user experience.

In at least one embodiment of the present disclosure, the edge application server deployment information (which may be referred to as EDI information) further includes at least one of: data network name (DNN), single network slice selection assistance information (S-NSSAI) (used to identify network slices), application information, and DNS server information.

It should be noted that the embodiment of the present disclosure does not limit the name of "edge application server deployment information", and other names of information that can be used to deploy edge application server are also applicable to the present disclosure.

For example, the above DNS server information is the Internet Protocol (IP) address information of the DNS server.

Optionally, the above-mentioned EDI information can be stored and queried in slices, DNN, or first information, etc.

The following embodiment is not according to the invention and is present for illustration purposes only. In an optional embodiment, the data structure of the edge application server deployment information is as shown in Table 1. The edge application server deployment information includes slice information, DNN information, and first information;

**Table 1**

| | | | | | |
|---|---|---|---|---|---|
| Slice information 1 | DNN information 1 | First message 1 | DNS address 1 | FQDN1 | Application server IP address 1 |
| Slice information 1 | DNN information 1 | First message 1 | DNS address 2 | FQDN1 | Application server IP address 2 |

The following embodiment is not according to the invention and is present for illustration purposes only. In another optional embodiment, the data structure of the edge application server deployment information is as shown in Table 2. The edge application server deployment information does not include slice information, DNN information, or first information;

**Table 2**

| | | |
|---|---|---|
| DNS address 1 | FQDN1 | Application server IP address 1 |
| DNS address 2 | FQDN1 | Application server IP address 2 |

Optionally, the first information is optional information. If the edge application server deployment information does not include the first information, or only the edge application server deployment information is received but the first information is not received, then the edge application Server deployment information applies to all groups within Slice+DNN.

In summary, in the embodiments of the present disclosure, the first device sends edge application server deployment information including a group identifier to the second device, or the first device sends edge application server deployment information and group identifier to the second device, so as to configure edge application server deployment information in a group granular manner, thereby better satisfying a flexible application server selection of specific user.

As shown in Fig. 2, an embodiment of the present disclosure also provides an information transmission method, which includes:
Step 201: receiving, by a second device, edge application server deployment information sent by a first device, where the edge application server deployment information includes first information; or receiving, by the second device, edge application server deployment information and first information sent by the first device; where the first information is an external group identifier;
Step 202: obtaining, by the second device, second information based on the first information, where the second information is an internal group identifier.

It should be noted that in the embodiment of the present disclosure, the external group identifier and the internal group identifier are both identifiers used to identify a group of UEs. AF (i.e., the first device) is a function external to the 5G system, so the external group identifier is used. The 5G system inside uses an internal group identifier to identify a group of UEs.

The first device is a network element or device corresponding to the application function AF; and the second device is a network element or device corresponding to the network exposure function (NEF), which is not specifically limited here.

Optionally, the first information may be: a group ID (group ID), or a group of UE IDs, or a UE group ID, or a group ID.

The embodiments of the present disclosure can configure edge application server deployment information in a group granular manner, thereby better satisfying the flexible application server selection of specific users and further improving user experience.

In at least one embodiment of the present disclosure, the method further includes:
sending, by the second device, the edge application server deployment information including the second information to a third device; or
sending, by the second device, the second information and the edge application server deployment information to the third device.

Optionally, the third device is a network element or device corresponding to a Unified Data Repository (UDR), or a network element or device corresponding to a Unified Data Management (UDM), which will not be limited here. In other words, in the embodiment of the present disclosure, NEF stores edge application server deployment information in UDR.

In at least one embodiment of the present disclosure, the edge application server deployment information (which may be referred to as EDI information) further includes at least one of data network name (DNN), single network slice selection assistance information (S-NSSAI), application information, and domain name system (DNS) server information. For example, the above DNS server information includes: the IP address of the DNS server.

Optionally, the above-mentioned EDI information can be stored and queried in slices, DNN, or first information, etc.

In at least one embodiment of the present disclosure, the method further includes:
receiving, by the second device, a first subscription request sent by a fourth device, where the first subscription request carries the DNN and/or the S-NSSAI;
sending, by the second device, the edge application server deployment information including the second information, or edge application server deployment information and the second information to the fourth device according to the first subscription request.

The fourth device is a network element or device corresponding to a Session Management Function (SMF).

In other words, in the embodiment of the present disclosure, SMF obtains the edge application server deployment information from NEF through the first subscription request, and simultaneously obtains the slice information, DNN information and second information corresponding to the edge application server deployment information; the slice information, DNN information and the second information may be included in the edge application server deployment information, or may be associated with the edge application server deployment information.

Optionally, the method further includes:
after receiving the first subscription request, the second device requesting the third device to return the edge application server deployment information including the second information, or requesting the third device to return the edge application server deployment information and the second information.

In the embodiment of the present disclosure, the edge application server deployment information including the second information or the edge application server deployment information and the second information are stored at the third device, then before the second device needs to respond to the subscription request of the fourth device to send the edge application server deployment information including the second information or the edge application server deployment information and the second information to the fourth device, the second device further needs to obtain from the third device, the corresponding edge application server deployment information including the second information or the edge application server deployment information and second information, thereby realizing information feedback to the fourth device.

In the embodiments of the present disclosure, each device exchanges edge application server deployment information including group identifier, or exchanges edge application server deployment information and group identifier, to configure edge application server deployment information in a group granular manner, thereby better satisfying a flexible application server selection of specific user.

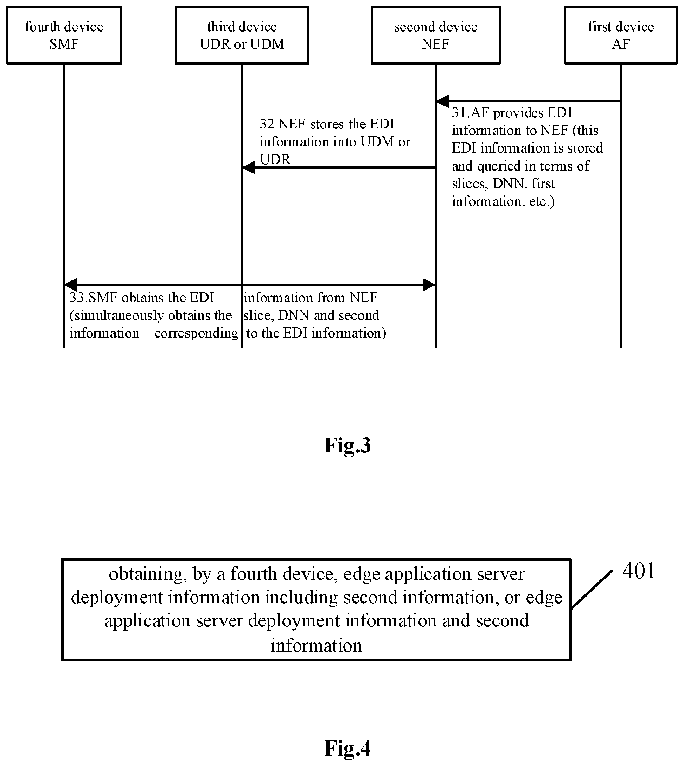

The following example is not according to the invention and is present for illustration purposes only. Example 1, the information interaction process between various devices is shown in Fig. 3:
Step 31: AF provides EDI information to NEF (this EDI information is stored and queried in terms of slices, DNN, first information, etc.).
Step 32, NEF stores the EDI information into UDM or UDR.
Step 33: SMF obtains the EDI information from NEF, and simultaneously obtains the slice, DNN and second information corresponding to the EDI information.

Optionally, NEF obtains the stored EDI information and the slice, DNN and second information corresponding to the EDI information from the UDM or UDR.

As shown in Fig. 4, the embodiment of the present disclosure also provides an information transmission method, which includes:

Step 401: obtaining, by a fourth device, edge application server deployment information including second information, or edge application server deployment information and second information; where second information is an internal group identifier.

It should be noted that in the embodiment of the present disclosure, the external group identifier and the internal group identifier are both identifiers used to identify a group of UEs. AF (i.e., the first device) is a function external to the 5G system, so it uses an external group identifier. The 5G system uses an internal group identifier to identify a group of UEs.

The fourth device is a network element or device corresponding to the session management function.

In at least one embodiment of the present disclosure, after step 401, if the fourth device SMF receives a session establishment request, the method further includes:
generating, by a fourth device, third information based on the edge application server deployment information including the second information, or the edge application server deployment information and the second information; where the third information includes: information identification and/or domain name system (DNS) information;
sending, by the fourth device, the third information to a fifth device.

In the embodiment of the present disclosure, when the fourth device determines the DNS handling rule (i.e., the above-mentioned third information) corresponding to the session, it not only needs to consider the slicing information, DNN information and local configuration information, but also needs to consider the internal group identifier (group ID), thus comprehensively considering generating a suitable DNS handling rule to implement DNS request processing of EDI information in a group granular manner, thereby better satisfying the flexible application server selection of specific users.

Optionally, the fifth device is a network element or device corresponding to an Edge Application Server Discovery Function (EASDF).

Optionally, the third information is: DNS handling information (BASELINE DNS handling information). The information identifier included in the above third information is a temple identifier (temple ID).

Optionally, the DNS information includes: at least one of a DNS request message, a DNS feedback message, application FQDN information, and application IP address information.

In the embodiment of the present disclosure, the fourth device determines the information identifier (temple ID) of the corresponding third information based on at least the second information corresponding to the session;

Correspondingly, the fourth device sends the information identifier (temple ID) of the corresponding third information to the fifth device EASDF.

In other words, in the embodiment of the present disclosure, although the fourth device needs to consider not only slice information, DNN information, and local configuration information, but also the internal group identifier (group ID) when determining the DNS handling rule (i.e., the above-mentioned third information) corresponding to the session, but its operation is imperceptible to the fifth device, that is, the embodiment of the present disclosure can implement more fine-grained application server selection without changing the processing flow of the fifth device.

In at least one embodiment of the present disclosure, step 401 includes:
sending, by the fourth device, a first subscription request to a second device, where the first subscription request carries a data network name (DNN) and/or single network slice selection assistance information (S-NSSAI);
receiving, by the fourth device, the edge application server deployment information including the second information, or the edge application server deployment information and the second information returned by the second device.

In other words, in the embodiment of the present disclosure, SMF obtains the edge application server deployment information from NEF through the first subscription request, and simultaneously obtains the slice information, DNN information and second information corresponding to the edge application server deployment information; the slice information, DNN information and the second information may be included in the edge application server deployment information, or may be associated with the edge application server deployment information.

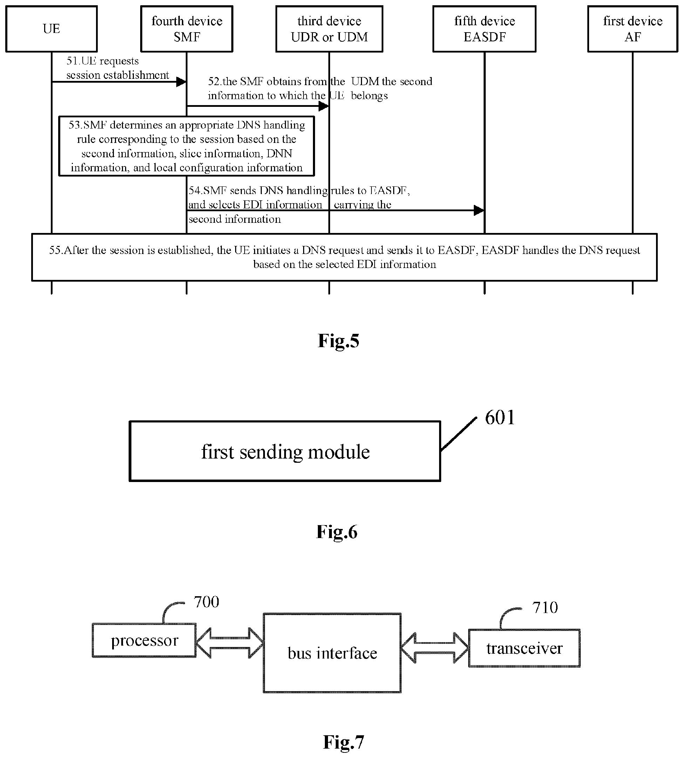

The following example is not according to the invention and is present for illustration purposes only. Example 2, the session establishment process is shown in Fig. 5:
Step 51, UE requests session establishment;
Step 52: According to the session requested by the UE, the SMF obtains from the UDM the second information to which the UE belongs.
Step 53: SMF determines the DNS handling rule corresponding to the session based on the second information, and slice information, DNN information, or local configuration information.
Step 54: SMF sends DNS handling rules to EASDF. Specifically, the DNS handling rules may include some identifiers or instructions to indicate appropriate EDI information (select EDI information carrying the second information).
Step 55: After the session is established, the UE initiates a DNS request and sends it to EASDF. EASDF selects appropriate EDI information according to the DNS handling rules for DNS information processing of the session.

To sum up, in the embodiment of the present disclosure, the devices exchange edge application server deployment information containing a group identifier, or exchange edge application server deployment information and group identifier with each other, to configure the edge application server deployment information in a group granular manner, thereby better satisfying a flexible application server selection of specific user and further improving the user experience.

The following embodiment is not according to the invention and is present for illustration purposes only. As shown in Fig. 6, an embodiment of the present disclosure also provides an information transmission apparatus, which includes:
a first sending module 601, configured to:
send edge application server deployment information to a second device, where the edge application server deployment information includes first information; or
send edge application server deployment information and first information to the second device;
the first information is an external group identifier.

Optionally, the edge application server deployment information further includes at least one of a data network name (DNN), single network slice selection assistance information (S-NSSAI), application information, and domain name system (DNS) server information.

In the embodiment of the present disclosure, the devices exchange edge application server deployment information containing a group identifier, or exchange edge application server deployment information and group identifier with each other, to configure the edge application server deployment information in a group granular manner, thereby better satisfying a flexible application server selection of specific user and further improving the user experience.

It should be noted that the information transmission apparatus provided by the embodiments of the present disclosure is a device capable of performing the above information transmission method, then all embodiments of the above information transmission method are applicable to this device, and can achieve the same or similar beneficial effects.

The following embodiment is not according to the invention and is present for illustration purposes only. As shown in Fig. 7, an embodiment of the present disclosure also provides a communication device. where the communication device is a first device and includes a processor 700 and a transceiver 710, the transceiver 710 is configured to receive and send data under a control of the processor 700, the processor 700 is configured to perform:
sending edge application server deployment information to a second device, where the edge application server deployment information includes first information; or
sending edge application server deployment information and first information to the second device;
where the first information is an external group identifier.

Optionally, the edge application server deployment information further includes at least one of a data network name (DNN), single network slice selection assistance information (S-NSSAI), application information, and domain name system (DNS) server information.

In the embodiment of the present disclosure, the devices exchange edge application server deployment information containing a group identifier, or exchange edge application server deployment information and group identifier with each other, to configure the edge application server deployment information in a group granular manner, thereby better satisfying a flexible application server selection of specific user and further improving the user experience.

It should be noted that the communication device provided by the embodiments of the present disclosure is a communication device capable of executing the above information transmission method, then all embodiments of the above information transmission method are applicable to the communication device, and can achieve the same or similar beneficial effects.

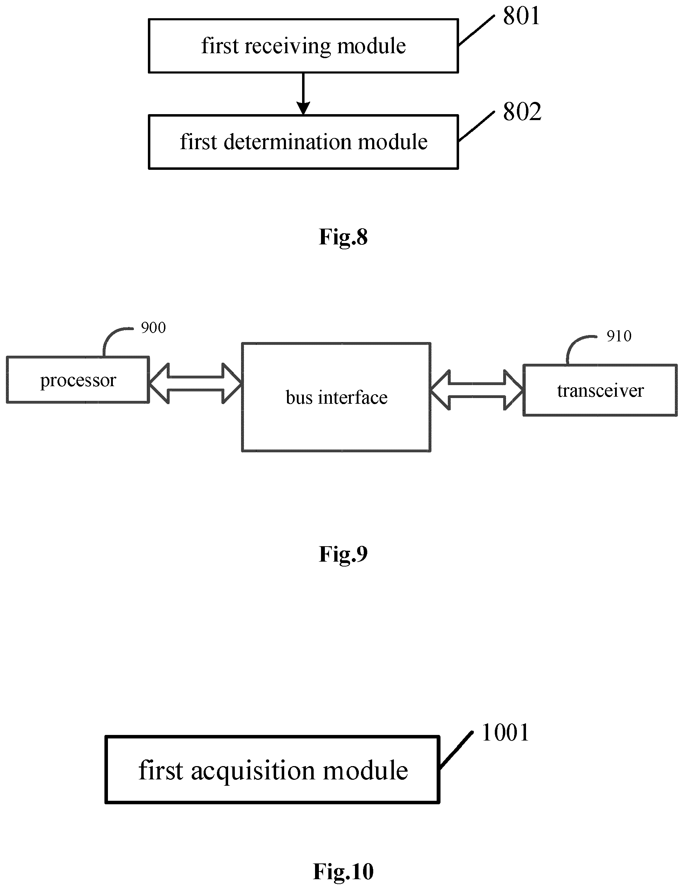

The following embodiment is not according to the invention and is present for illustration purposes only. As shown in Fig. 8, the embodiment of the present disclosure also provides an information transmission apparatus, which includes:
a first receiving module 801, configured to receive edge application server deployment information sent by a first device, where the edge application server deployment information includes first information; or receive edge application server deployment information and first information sent by the first device; where the first information is an external group identifier;
a first determination module 802, configured to obtain second information based on the first information, where the second information is an internal group identifier.

Optionally, the apparatus further includes:
a third sending module, configured to send the edge application server deployment information including the second information to a third device, or send the second information and the edge application server deployment information to the third device.

Optionally, the edge application server deployment information including the second information further includes at least one of data network name (DNN), single network slice selection assistance information (S-NSSAI), application information, and domain name system (DNS) server information.

Optionally, the apparatus further includes:
a second receiving module, configured to receive a first subscription request sent by a fourth device, where the first subscription request carries the DNN and/or the S-NSSAI;
a fourth sending module, configured to send the edge application server deployment information including the second information, or edge application server deployment information and the second information to the fourth device according to the first subscription request.

Optionally, the apparatus further includes:
a requesting module, configured to, after receiving the first subscription request, request the third device to return the edge application server deployment information including the second information, or requesting the third device to return the edge application server deployment information and the second information.

Optionally, the second information is an internal group identifier of the UE.

In the embodiment of the present disclosure, the devices exchange edge application server deployment information containing a group identifier, or exchange edge application server deployment information and group identifier with each other, to configure the edge application server deployment information in a group granular manner, thereby better satisfying a flexible application server selection of specific user and further improving the user experience.

It should be noted that the information transmission apparatus provided by the embodiments of the present disclosure is a device capable of executing the above information transmission method, then all embodiments of the above information transmission method are applicable to this device, and can achieve the same or similar beneficial effects.

As shown in Fig. 9, an embodiment of the present disclosure also provides a communication device. The communication device is a second device and includes a processor 900 and a transceiver 910, the transceiver 910 is configured to receive and send data under a control of the processor 900, and the processor 900 is configured to perform:
receiving edge application server deployment information sent by a first device, where the edge application server deployment information includes first information; or receiving edge application server deployment information and first information sent by the first device; where the first information is an external group identifier;
obtaining second information based on the first information, where the second information is an internal group identifier.

Optionally, the processor is further configured to perform:
sending the edge application server deployment information including the second information to a third device;
   or
sending the second information and the edge application server deployment information to the third device.

Optionally, the edge application server deployment information including the second information further includes at least one of data network name (DNN), single network slice selection assistance information (S-NSSAI), application information, and domain name system (DNS) server information.

The processor is further configured to perform:
receiving a first subscription request sent by a fourth device, where the first subscription request carries the DNN and/or the S-NSSAI;
sending the edge application server deployment information including the second information, or edge application server deployment information and the second information to the fourth device according to the first subscription request.

Optionally, the processor is further configured to perform:
after receiving the first subscription request, requesting the third device to return the edge application server deployment information including the second information, or requesting the third device to return the edge application server deployment information and the second information.

In the embodiment of the present disclosure, the devices exchange edge application server deployment information containing a group identifier, or exchange edge application server deployment information and group identifier with each other, to configure the edge application server deployment information in a group granular manner, thereby better satisfying a flexible application server selection of specific user and further improving the user experience.

It should be noted that the communication device provided by the embodiments of the present disclosure is a communication device capable of executing the above information transmission method, then all embodiments of the above information transmission method are applicable to the communication device, and can achieve the same or similar beneficial effects.

The following embodiment is not according to the invention and is present for illustration purposes only. As shown in Fig. 10, the embodiment of the present disclosure further provides an information transmission apparatus, which includes:
a first acquisition module 1001, configured to obtain edge application server deployment information including second information, or edge application server deployment information and second information; where second information is an internal group identifier.

Optionally, the apparatus further comprises:
a generating module, configured to generate third information based on the edge application server deployment information including the second information, or the edge application server deployment information and the second information; where the third information includes: information identification and/or DNS information;
a second sending module, configured to send the third information to a fifth device.

Optionally, the first acquisition module includes:
a first sending submodule, configured to send a first subscription request to a second device, where the first subscription request carries a data network name (DNN) and/or single network slice selection assistance information (S-NSSAI);
a first receiving submodule, configured to receive the edge application server deployment information including the second information, or the edge application server deployment information and the second information returned by the second device.

In the embodiment of the present disclosure, the devices exchange edge application server deployment information containing a group identifier, or exchange edge application server deployment information and group identifier with each other, to configure the edge application server deployment information in a group granular manner, thereby better satisfying a flexible application server selection of specific user and further improving the user experience.

It should be noted that the information transmission apparatus provided by the embodiments of the present disclosure is a device capable of executing the above information transmission method, then all embodiments of the above information transmission method are applicable to this device, and can achieve the same or similar beneficial effects.

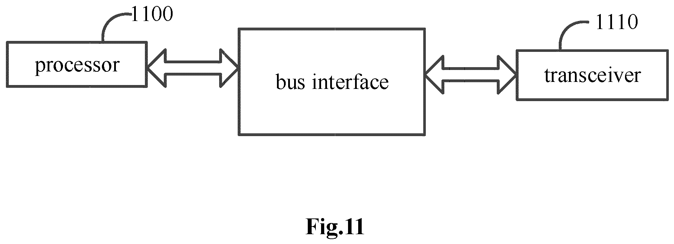

As shown in Fig. 11, an embodiment of the present disclosure also provides a communication device. where the communication device is a fourth device and includes a processor 1100 and a transceiver 1110, the transceiver 1110 is configured to receive and send data under a control of the processor 1100, and the processor 1100 is configured to perform:
obtaining edge application server deployment information including second information, or edge application server deployment information and second information; where second information is an internal group identifier.

Optionally, the processor is further configured to perform:
generating third information based on the edge application server deployment information including the second information, or the edge application server deployment information and the second information; where the third information includes: information identification and/or DNS information;
sending the third information to a fifth device.

The processor is further configured to perform:
sending a first subscription request to a second device, where the first subscription request carries a data network name (DNN) and/or single network slice selection assistance information (S-NSSAI);
receiving the edge application server deployment information including the second information, or the edge application server deployment information and the second information returned by the second device.

In the embodiment of the present disclosure, the devices exchange edge application server deployment information containing a group identifier, or exchange edge application server deployment information and group identifier with each other, to configure the edge application server deployment information in a group granular manner, thereby better satisfying a flexible application server selection of specific user and further improving the user experience.

It should be noted that the communication device provided by the embodiments of the present disclosure is a communication device capable of executing the above information transmission method, then all embodiments of the above information transmission method are applicable to the communication device, and can achieve the same or similar beneficial effects.

The embodiment of the present disclosure also provides a communication device, which is a first device, a second device, or a third device. The communication device includes a memory, a processor, and a device stored in the memory and executable on the processor. When the processor executes the computer program, it implements each process in the information transmission method embodiment as described above, and can achieve the same technical effect. To avoid repetition, the details will not be described here.

Embodiments of the present disclosure also provide a computer-readable storage medium on which a computer program is stored. When executed by a processor, the program implements each process in the information transmission method embodiment as described above, and can achieve the same technical effect. To avoid repetition, the details will not be described here. The computer-readable storage medium is such as read-only memory (ROM), Random Access Memory (RAM), magnetic disk or optical disk, etc.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-readable storage media (including, but not limited to, magnetic disk storage, optical storage, and the like) embodying computer-usable program code therein.

The disclosure is described with reference to flowchart illustrations and/or block diagrams of methods, apparatus (systems) and computer program products according to embodiments of the disclosure. It will be understood that each process and/or block in the flowchart illustrations and/or block diagrams, and combinations of processes and/or blocks in the flowchart illustrations and/or block diagrams, can be implemented by computer program instructions. These computer program instructions may be provided to a processor of a general purpose computer, special purpose computer, embedded processor, or other programmable data processing device to produce a machine, such that the instructions executed by the processor of the computer or other programmable data processing device produce a device for realizing the functions specified in one process or processes and/or one block or multiple blocks in the flowchart.

These computer program instructions may also be stored in a computer-readable storage medium capable of directing a computer or other programmable data processing apparatus to operate in a particular manner, such that the instructions stored in the computer-readable storage medium produce a paper product including instruction means, The instruction means implements the functions specified in a process or processes of the flowchart and/or a block or blocks of the block diagram.

These computer program instructions may also be loaded onto a computer or other programmable data processing device, causing the computer or other programmable device to perform a series of operating steps to produce computerimplemented processes, thereby causing the instructions to be executed on the computer or other programmable device provide steps for implementing the functionality specified in a process or processes in a flow diagram and/or in a block or blocks in a block diagram.

The above are the preferred embodiments of the present disclosure. It should be noted that those of ordinary skill in the art can also make several improvements and modifications without departing from the principles described in the present disclosure. These improvements and modifications should also be regarded as the protection scope of this disclosure. The invention is defined by the appended claims.

## Claims

1. An information transmission method, comprising
receiving (S201), by a second device, edge application server deployment information sent by a first device, wherein the edge application server deployment information comprises first information; or
receiving (S201), by the second device, edge application server deployment information and first information sent by the first device; wherein the first information is an external group identifier;
obtaining (S202), by the second device, second information based on the first information, wherein the second information is an internal group identifier,
wherein the method further comprises:
receiving, by the second device, a first subscription request sent by a fourth device, wherein the first subscription request carries at least one of a data network name, DNN and a single network slice selection assistance information, S-NSSAI;
sending, by the second device, the edge application server deployment information comprising the second information, or edge application server deployment information and the second information to the fourth device according to the first subscription request;
wherein the external group identifier is a UE group identifier used by a function external to a 5G system, and the internal group identifier is a UE group identifier used by a function internal to the 5G system,
wherein the first device is an AF, the second device is an NEF, the fourth device is an SMF.

2. The method according to claim 1, further comprising:
sending, by the second device, the edge application server deployment information comprising the second information to a third device;
or
sending, by the second device, the second information and the edge application server deployment information to the third device,
wherein the third device is a UDR or UDM.

3. The method according to claim 2, wherein the edge application server deployment information comprising the second information further comprises at least one of data network name , DNN, single network slice selection assistance information, S-NSSAI, application information, and domain name system, DNS, server information; wherein the method further comprises:
after receiving the first subscription request, the second device requesting the third device to return the edge application server deployment information comprising the second information, or requesting the third device to return the edge application server deployment information and the second information.

4. An information transmission method, comprising:
10 obtaining (S401), by a fourth device, edge application server deployment information comprising second information, or edge application server deployment information and second information; wherein second information is an internal group identifier,
wherein the obtaining (S401), by the fourth device, the edge application server deployment information comprising the second information, or the edge application 15 server deployment information and the second information comprises:
sending, by the fourth device, a first subscription request to a second device, wherein the first subscription request carries a data network name, DNN, and/or single network slice selection assistance information, S-NNSAI;
receiving, by the fourth device, the edge application server deployment information 20 comprising the second information, or the edge application server deployment information and the second information returned by the second device,
wherein the internal group identifier is a UE group identifier used by a function internal to a 5G system,
wherein the second device is an NEF, the fourth device is an SMF. 25

5. The method according to claim 4, further comprising:
generating, by the fourth device, third information based on the edge application server deployment information comprising the second information, or the edge application server deployment information and the second information; wherein the third 30 information comprises: information identification and/or domain name system, DNS, information;
sending, by the fourth device, the third information to a fifth device,
wherein the fifth device is an EASDF.

6. A communication device, the communication device is a second device and comprises a processor (900) and a transceiver (910), the transceiver (910) is configured to receive and send data under a control of the processor, and the processor (900) is configured to perform:
receiving edge application server deployment information sent by a first device, wherein the edge application server deployment information comprises first information; or receiving edge application server deployment information and first information sent by the first device; wherein the first information is an external group identifier;
obtaining second information based on the first information, wherein the second information is an internal group identifier,
wherein the processor (900) is configured to perform:
receiving a first subscription request sent by a fourth device, wherein the first subscription request carries at least one of a data network name, DNN and a single network slice selection assistance information, S-NSSAI;
sending the edge application server deployment information comprising the second information, or edge application server deployment information and the second information to the fourth device according to the first subscription request;
wherein the external group identifier is a UE group identifier used by a function external to a 5G system, and the internal group identifier is a UE group identifier used by a function internal to the 5G system,
wherein the first device is an AF, the second device is an NEF, the fourth device is an SMF.

7. The communication device according to claim 6, wherein the processor (900) is further configured to perform:
sending the edge application server deployment information comprising the second information to a third device;
or
sending the second information and the edge application server deployment information to the third device;
wherein the edge application server deployment information comprising the second information further comprises at least one of data network name, DNN, single network slice selection assistance information, S-NNSAI, application information, and domain name system, DNS, server information;
wherein the processor (900) is further configured to perform:
after receiving the first subscription request, requesting the third device to return the edge application server deployment information comprising the second information, or requesting the third device to return the edge application server deployment information and the second information,
wherein the third device is a UDR or UDM.

8. A communication device, the communication device is a fourth device and comprises a processor (1100) and a transceiver (1110), the transceiver (1110) is configured to receive and send data under a control of the processor, and the processor (1100) is configured to perform:
obtaining edge application server deployment information comprising second information, or edge application server deployment information and second information; wherein second information is an internal group identifier,
wherein the processor is further configured to perform:
sending a first subscription request to a second device, wherein the first subscription request carries a data network name, DNN, and/or single network slice selection assistance information, S-NNSAI;
receiving the edge application server deployment information comprising the second information, or the edge application server deployment information and the second information returned by the second device,
wherein the internal group identifier is a UE group identifier used by a function internal to a 5G system,
wherein the second device is an NEF, and the fourth device is an SMF.

9. The communication device according to claim 8, wherein the processor (1100) is further configured to perform:
generating third information based on the edge application server deployment information comprising the second information, or the edge application server deployment information and the second information; wherein the third information comprises: information identification and/or DNS information;
sending the third information to a fifth device,
wherein the fifth device is an EASDF.

## Patentansprüche

1. Verfahren zur Informationsübertragung, mit den Schritten:
Empfangen (S201) von durch ein erstes Gerät gesendeter Edge-Anwendungsserver-Bereitstellungsinformation durch ein zweites Gerät, wobei die Edge-Anwendungsserver-Bereitstellungsinformation erste Information umfasst; oder
Empfangen (S201) von durch das erste Gerät gesendeter Edge-Anwendungsserver-Bereitstellungsinformation und erster Information durch das zweite Gerät; wobei die erste Information eine externe Gruppenkennung ist;
Ermitteln (S202) von zweiter Information durch das zweite Gerät anhand der ersten Information, wobei die zweite Information eine interne Gruppenkennung ist,
wobei das Verfahren ferner umfasst:
Empfangen einer von einem vierten Gerät gesendeten ersten Abonnementanforderung durch das zweite Gerät, wobei die erste Abonnementanforderung einen Datennetzwerknamen, DNN, und/oder eine Unterstützungsinformation zur Auswahl einer einzelnen Netzwerkscheibe, S-NSSAI, befördert;
Senden der Edge-Anwendungsserver-Bereitstellungsinformation, die die zweite Information umfasst, oder der Edge-Anwendungsserver-Bereitstellungsinformation und der zweiten Information durch das zweite Gerät an das vierte Gerät gemäß der ersten Abonnementanfrage;
wobei die externe Gruppenkennung eine UE-Gruppenkennung ist, die von einer Funktion außerhalb eines 5G-Systems verwendet wird, und die interne Gruppenkennung eine UE-Gruppenkennung ist, die von einer Funktion innerhalb des 5G-Systems verwendet wird,
wobei das erste Gerät ein AF ist, das zweite Gerät ein NEF ist und das vierte Gerät ein SMF ist.

2. Verfahren nach Anspruch 1 mit den weiteren Schritten:
Senden der Edge-Anwendungsserver-Bereitstellungsinformation, die die zweite Information umfasst, durch das zweite Gerät an ein drittes Gerät; oder
Senden der zweiten Information und der Edge-Anwendungsserver-Bereitstellungsinformation durch das zweite Gerät an das dritte Gerät,
wobei das dritte Gerät ein UDR oder ein UDM ist.

3. Verfahren nach Anspruch 2, bei dem die Edge-Anwendungsserver-Bereitstellungsinformation, die die zweite Information umfasst, ferner einen Datennetzwerknamen, DNN, eine Unterstützungsinformation zur Auswahl einer einzelnen Netzwerkscheibe, S-NSSAI, Anwendungsinformation und/oder Information zu einem DNS-Server (Domain Name System) umfasst;
wobei das Verfahren ferner umfasst, dass:
das zweite Gerät nach dem Empfang der ersten Abonnementanfrage das dritte Gerät auffordert, die Edge-Anwendungsserver-Bereitstellungsinformation, die die zweite Information umfasst, zurückzusenden, oder das dritte Gerät auffordert, die Edge-Anwendungsserver-Bereitstellungsinformation und die zweite Information zurückzusenden.

4. Verfahren zur Informationsübertragung, mit den Schritten:
Ermitteln (S401) von Edge-Anwendungsserver-Bereitstellungsinformation, die zweite Information umfasst, oder von Edge-Anwendungsserver-Bereitstellungsinformation und zweiter Information durch ein viertes Gerät; wobei die zweite Information eine interne Gruppenkennung ist,
wobei das Ermitteln (S401) der Edge-Anwendungsserver-Bereitstellungsinformation, die die zweite Information umfasst, oder der Edge-Anwendungsserver-Bereitstellungsinformation und der zweiten Information durch das vierte Gerät umfasst:
Senden einer ersten Abonnementanfrage durch das vierte Gerät an ein zweites Gerät, wobei die erste Abonnementanfrage einen Datennetzwerknamen, DNN, und/oder eine Unterstützungsinformation zur Auswahl einer einzelnen Netzwerkscheibe, S-NSSAI, enthält,
Empfangen der Edge-Anwendungsserver-Bereitstellungsinformation, die die zweite Information umfasst, oder der Edge-Anwendungsserver-Bereitstellungsinformation und der zweiten Information, die von dem zweiten Gerät zurückgesendet werden, durch das vierte Gerät,
wobei die interne Gruppenkennung eine UE-Gruppenkennung ist, die von einer Funktion innerhalb eines 5G-Systems verwendet wird,
wobei das zweite Gerät ein NEF ist und das vierte Gerät ein SMF ist.

5. Verfahren nach Anspruch 4, ferner umfassend:
Erzeugen von dritter Information durch das vierte Gerät auf der Grundlage der Edge-Anwendungsserver-Bereitstellungsinformation, die die zweite Information umfasst, oder der Edge-Anwendungsserver-Bereitstellungsinformation und der zweiten Information; wobei die dritte Information eine Informationskennung und/oder DNS, Domain Name System-, Information umfasst;
Senden der dritten Information durch das vierte Gerät an ein fünftes Gerät,
wobei das fünfte Gerät ein EASDF ist.

6. Kommunikationsgerät, wobei das Kommunikationsgerät ein zweites Gerät ist und einen Prozessor (900) sowie einen Transceiver (910) umfasst, wobei der Transceiver (910) konfiguriert ist, um unter der Steuerung des Prozessors Daten zu empfangen und zu senden, und der Prozessor (900) konfiguriert ist zum:
Empfangen von durch ein erstes Gerät gesendeter Edge-Anwendungsserver-Bereitstellungsinformation, wobei die Edge-Anwendungsserver-Bereitstellungsinformation erste Information umfasst; oder Empfangen von Edge-Anwendungsserver-Bereitstellungsinformation und von erster Information, die von dem ersten Gerät gesendet wurden; wobei die erste Information eine externe Gruppenkennung ist;
Ermitteln von zweiter Information auf der Grundlage der ersten Information, wobei die zweite Information eine interne Gruppenkennung ist,
wobei der Prozessor (900) konfiguriert ist zum:
Empfangen einer von einem vierten Gerät gesendeten ersten Abonnementanfrage, wobei die erste Abonnementanfrage mindestens einen Datennetzwerknamen, DNN, und/oder eine Unterstützungsinformation zur Auswahl einer einzelnen Netzwerkscheibe, S-NSSAI, umfasst;
Senden der Edge-Anwendungsserver-Bereitstellungsinformation, die die zweite Information umfasst, oder der Edge-Anwendungsserver-Bereitstellungsinformation und der zweiten Information an das vierte Gerät gemäß der ersten Abonnementanfrage;
wobei die externe Gruppenkennung eine UE-Gruppenkennung ist, die von einer Funktion außerhalb eines 5G-Systems verwendet wird, und die interne Gruppenkennung eine UE-Gruppenkennung ist, die von einer Funktion innerhalb des 5G-Systems verwendet wird,
wobei das erste Gerät ein AF ist, das zweite Gerät ein NEF ist und das vierte Gerät ein SMF ist.

7. Kommunikationsgerät nach Anspruch 6, bei dem der Prozessor (900) ferner konfiguriert ist zum:
Senden der Edge-Anwendungsserver-Bereitstellungsinformation, die die zweite Information umfasst, an ein drittes Gerät; oder
Senden der zweiten Information und der Edge-Anwendungsserver-Bereitstellungsinformation an das dritte Gerät;
wobei die Edge-Anwendungsserver-Bereitstellungsinformation, die die zweite Information umfasst, ferner den Datennetzwerknamen, DNN, eine Unterstützungsinformation zur Auswahl einer einzelnen Netzwerkscheibe, S-NSSAI, und Information zum Domain Name System-, DNS-, Server umfasst;
wobei der Prozessor (900) ferner ausgelegt ist,
nach dem Empfang der ersten Abonnementanfrage das dritte Gerät aufzufordern, die Edge-Anwendungsserver-Bereitstellungsinformation, die die zweite Information umfasst, zurückzusenden, oder das dritte Gerät aufzufordern, die Edge-Anwendungsserver-Bereitstellungsinformation und die zweite Information zurückzusenden,
wobei das dritte Gerät ein UDR oder ein UDM ist.

8. Kommunikationsgerät, wobei das Kommunikationsgerät ein viertes Gerät ist und einen Prozessor (1100) sowie einen Transceiver (1110) umfasst, wobei der Transceiver (1110) konfiguriert ist, um unter der Steuerung des Prozessors Daten zu empfangen und zu senden, und der Prozessor (1100) konfiguriert ist zum
Ermitteln von Edge-Anwendungsserver-Bereitstellungsinformation, die zweite Informationen umfasst, oder von Edge-Anwendungsserver-Bereitstellungsinformation und zweiter Information; wobei die zweite Information eine interne Gruppenkennung ist,
wobei der Prozessor ferner ausgelegt ist zum:
Senden einer ersten Abonnementanfrage an ein zweites Gerät, wobei die erste Abonnementanfrage einen Datennetzwerknamen, DNN, und/oder eine Unterstützungsinformation zur Auswahl einer einzelnen Netzwerkscheibe, S-NSSAI, umfasst,
Empfangen der Edge-Anwendungsserver-Bereitstellungsinformation, die die zweite Information umfasst, oder der Edge-Anwendungsserver-Bereitstellungsinformation und der zweiten Information, die vom zweiten Gerät zurückgesendet werden;
wobei die interne Gruppenkennung eine UE-Gruppenkennung ist, die von einer Funktion innerhalb eines 5G-Systems verwendet wird,
wobei das zweite Gerät ein NEF ist und das vierte Gerät ein SMF ist.

9. Kommunikationsgerät nach Anspruch 8, bei dem der Prozessor (1100) ferner konfiguriert ist, um folgende Schritte auszuführen:
Erzeugen von dritter Information auf der Grundlage der Edge-Anwendungsserver-Bereitstellungsinformation, die die zweite Information umfasst, oder der Edge-Anwendungsserver-Bereitstellungsinformation und der zweiten Information; wobei die dritte Information eine Informationskennung und/oder DNS-Information umfasst;
Senden der dritten Information an ein fünftes Gerät,
wobei das fünfte Gerät ein EASDF ist.

## Revendications

1. Procédé de transmission d'informations, comprenant les étapes prévoyant de
recevoir (S201), par l'intermédiaire d'un deuxième dispositif, des informations de déploiement de serveur d'application de bord envoyées par un premier dispositif, dans lequel les informations de déploiement de serveur d'application de bord comprennent des premières informations ; ou
recevoir (S201), par l'intermédiaire du second dispositif, des informations de déploiement de serveur d'application de bord et des premières informations envoyées par le premier dispositif ; dans lequel les premières informations sont un identifiant de groupe externe ;
obtenir (S202), par l'intermédiaire du deuxième dispositif, des deuxièmes informations sur la base des premières informations, dans lequel les deuxièmes informations sont un identifiant de groupe interne,
dans lequel le procédé comprend en outre les étapes prévoyant de :
recevoir, par l'intermédiaire du deuxième dispositif, une première demande d'abonnement envoyée par un quatrième dispositif, dans lequel la première demande d'abonnement porte au moins un parmi un nom de réseau de données, DNN, et des informations d'assistance de sélection de tranche de réseau unique, S-NSSAI ;
envoyer, par l'intermédiaire du second dispositif, les informations de déploiement de serveur d'application de bord comprenant les deuxièmes informations, ou des informations de déploiement de serveur d'application de bord et des deuxièmes informations au quatrième dispositif selon la première demande d'abonnement ;
dans lequel l'identifiant de groupe externe est un identifiant de groupe UE utilisé par une fonction externe à un système 5G, et l'identifiant de groupe interne est un identifiant de groupe UE utilisé par une fonction interne au système 5G,
dans lequel le premier dispositif est un AF, le deuxième dispositif est un NEF, le quatrième dispositif est un SMF.

2. Procédé selon la revendication 1, comprenant en outre les étapes prévoyant de :
envoyer, par l'intermédiaire du deuxième dispositif, les informations de déploiement de serveur d'application de bord comprenant les deuxièmes informations à un troisième dispositif ;
ou
envoyer, par l'intermédiaire du deuxième dispositif, les deuxièmes informations et les informations de déploiement de serveur d'application de bord au troisième dispositif,
dans lequel le troisième dispositif est un UDR ou un UDM.

3. Procédé selon la revendication 2, dans lequel les informations de déploiement de serveur d'application de bord comprenant les deuxièmes informations comprennent en outre au moins un parmi un nom de réseau de données, un DNN, des informations d'assistance de sélection de tranche de réseau unique, S-NSSAI, des informations d'application et des informations de serveur de système de nom de domaine, DNS ;
dans lequel le procédé comprend en outre :
après réception de la première demande d'abonnement, le deuxième dispositif demandant au troisième dispositif de renvoyer les informations de déploiement de serveur d'application de bord comprenant les deuxièmes informations, ou demandant au troisième dispositif de renvoyer les informations de déploiement de serveur d'application de bord et les deuxièmes informations.

4. Procédé de transmission d'informations, comprenant l'étape prévoyant de :
obtenir (S401), par l'intermédiaire d'un quatrième dispositif, des informations de déploiement de serveur d'application de bord comprenant des deuxièmes informations, ou des informations de déploiement de serveur d'application de bord et des deuxièmes informations ; dans lequel les deuxièmes informations sont un identifiant de groupe interne, dans lequel l'obtention (S401), par l'intermédiaire du quatrième dispositif, des informations de déploiement de serveur d'application de bord comprenant les deuxièmes informations, ou les informations de déploiement de serveur d'application de bord et les deuxièmes informations comprennent les étapes prévoyant de :
envoyer, par l'intermédiaire du quatrième dispositif, une première demande d'abonnement à un deuxième dispositif, dans lequel la première demande d'abonnement porte un nom de réseau de données, DNN, et/ou des informations d'assistance de sélection de tranche de réseau unique, S-NNSAI ;
recevoir, par l'intermédiaire du quatrième dispositif, les informations de déploiement de serveur d'application de bord comprenant les deuxièmes informations, ou les informations de déploiement de serveur d'application de bord et les deuxièmes informations renvoyées par le deuxième dispositif,
dans lequel l'identifiant de groupe interne est un identifiant de groupe UE utilisé par une fonction interne à un système 5G,
dans lequel le deuxième dispositif est un NEF, le quatrième dispositif est un SMF.

5. Procédé selon la revendication 4, comprenant en outre les étapes prévoyant de :
générer, par l'intermédiaire du quatrième dispositif, des troisièmes informations sur la base des informations de déploiement de serveur d'application de bord comprenant les deuxièmes informations, ou les informations de déploiement de serveur d'application de bord et les deuxièmes informations ; dans lequel les troisièmes informations comprennent : des informations d'identification et/ou des informations de système de nom de domaine,DNS ;
envoyer, par l'intermédiaire du quatrième dispositif, les troisièmes informations à un cinquième dispositif,
dans lequel le cinquième dispositif est un EASDF.

6. Dispositif de communication, le dispositif de communication est un deuxième dispositif et comprend un processeur (900) et un émetteur-récepteur (910), l'émetteur-récepteur (910) est configuré pour recevoir et envoyer des données sous une commande du processeur, et le processeur (900) est configuré pour effectuer les étapes prévoyant de :
recevoir des informations de déploiement de serveur d'application de bord envoyées par un premier dispositif, dans lequel les informations de déploiement de serveur d'application de bord comprennent des premières informations ; ou recevoir des informations de déploiement de serveur d'application de bord et des premières informations envoyées par le premier dispositif ; dans lequel les premières informations sont un identifiant de groupe externe ;
obtenir des deuxièmes informations sur la base des premières informations, dans lequel les deuxièmes informations sont un identifiant de groupe interne,
dans lequel le processeur (900) est configuré pour effectuer les étapes prévoyant de :
recevoir une première demande d'abonnement envoyée par un quatrième dispositif, dans lequel la première demande d'abonnement porte au moins un parmi un nom de réseau de données, DNN, et des informations d'assistance de sélection de tranche de réseau unique, S-NSSAI ;
envoyer, par l'intermédiaire du second dispositif, les informations de déploiement de serveur d'application de bord comprenant les deuxièmes informations, ou des informations de déploiement de serveur d'application de bord et des deuxièmes informations au quatrième dispositif selon la première demande d'abonnement ;
dans lequel l'identifiant de groupe externe est un identifiant de groupe UE utilisé par une fonction externe à un système 5G, et l'identifiant de groupe interne est un identifiant de groupe UE utilisé par une fonction interne au système 5G,
dans lequel le premier dispositif est un AF, le deuxième dispositif est un NEF, le quatrième dispositif est un SMF.

7. Dispositif de communication selon la revendication 6, dans lequel le processeur (900) est en outre configuré pour effectuer l'étape prévoyant de :
envoyer les informations de déploiement de serveur d'application de bord comprenant les deuxièmes informations à un troisième dispositif ;
ou
envoyer les deuxièmes informations et les informations de déploiement de serveur d'application de bord au troisième dispositif,
dans lequel les informations de déploiement de serveur d'application de bord comprenant les deuxièmes informations comprennent en outre au moins un parmi un nom de réseau de données, un DNN, des informations d'assistance de sélection de tranche de réseau unique, S-NNSAI, des informations d'application et des informations de serveur de système de nom de domaine, DNS ;
dans lequel le processeur (900) est en outre configuré pour effectuer l'étape prévoyant:
après réception de la première demande d'abonnement, demander au troisième dispositif de renvoyer les informations de déploiement de serveur d'application de bord comprenant les deuxièmes informations, ou demander au troisième dispositif de renvoyer les informations de déploiement de serveur d'application de bord et les deuxièmes informations.
dans lequel le troisième dispositif est un UDR ou un UDM.

8. Dispositif de communication, le dispositif de communication est un quatrième dispositif et comprend un processeur (1100) et un émetteur-récepteur (1110), l'émetteur-récepteur (1110) est configuré pour recevoir et envoyer des données sous une commande du processeur, et le processeur (1100) est configuré pour effectuer les étapes prévoyant de :
obtenir des informations de déploiement de serveur d'application de bord comprenant des deuxièmes informations, ou des informations de déploiement de serveur d'application de bord et des deuxièmes informations ; dans lequel les deuxièmes informations sont un identifiant de groupe interne,
dans lequel le processeur est en outre configuré pour effectuer les étapes prévoyant de :
envoyer une première demande d'abonnement à un deuxième dispositif, dans lequel la première demande d'abonnement porte un nom de réseau de données, DNN, et/ou des informations d'assistance de sélection de tranche de réseau unique, S-NNSAI ;
recevoir les informations de déploiement de serveur d'application de bord comprenant les deuxièmes informations, ou les informations de déploiement de serveur d'application de bord et les deuxièmes informations renvoyées par le deuxième dispositif,
dans lequel l'identifiant de groupe interne est un identifiant de groupe UE utilisé par une fonction interne à un système 5G,
dans lequel le deuxième dispositif est un NEF, et le quatrième dispositif est un SMF.

9. Dispositif de communication selon la revendication 8, dans lequel le processeur (1100) est en outre configuré pour effectuer les étapes prévoyant de :
générer des troisièmes informations sur la base des informations de déploiement de serveur d'application de bord comprenant les deuxièmes informations, ou les informations de déploiement de serveur d'application de bord et les deuxièmes informations ; dans lequel les troisièmes informations comprennent :
une identification d'informations et/ou des informations de DNS ;
envoyer les troisièmes informations à un cinquième dispositif,
dans lequel le cinquième dispositif est un EASDF.
